# EUROPÄISCHE PATENTSCHRIFT

(11) **EP 3 924 910 B1**
(45) Veröffentlichungstag und Bekanntmachung des Hinweises auf die Patenterteilung: **10.09.2025**
(21) Anmeldenummer: 20703002.4
(22) Anmeldetag: 30.01.2020
(51) Int. Cl.: G06Q 10/0631

(54) **SYSTEM UND VERFAHREN ZUM BETREIBEN VON HAUSGERÄTEN**
SYSTEM AND METHOD FOR OPERATING HOUSEHOLD APPLIANCES
SYSTÈME ET PROCÉDÉ POUR FAIRE FONCTIONNER DES APPAREILS MÉNAGERS

(30) Priorität: 12.02.2019 DE 102019201780
(43) Veröffentlichungstag der Anmeldung: 22.12.2021
(73) Patentinhaber: BSH Hausgeräte GmbH, 81739 München (DE)
(72) Erfinder: GRIMMINGER, Jochen, 89407 Dillingen (DE); KOLBE, Andreas, 12683 Berlin (DE); KRAUTENBACHER, Otto, 83349 Palling (DE); SÖLLNER, Christoph, 81475 München (DE); SIEVEKE, Kai, 97070 Würzburg (DE); BRUNNER, Andreas, 83301 Traunreut (DE)
(86) Internationale Anmeldenummer: PCT/EP2020/052285
(87) Internationale Veröffentlichungsnummer: WO 2020/164919

(56) Entgegenhaltungen:
- DE-A1- 102014 217 616
- DE-A1- 102015 211 425
- US-A1- 2018 004 568
- US-A1- 2018 181 094
- US-B1- 8 145 854

## Beschreibung

Die Erfindung betrifft ein System und ein entsprechendes Verfahren zum Betreiben von unterschiedlichen Typen von Hausgeräten.

In einem Haushalt werden von einer Person häufig komplexe Tätigkeiten erbracht, um ein bestimmtes Arbeitsergebnis zu erstellen. Beispielsweise kann es für ein Abendessen mit mehreren Gästen gewünscht sein, ein mehrgängiges Menu als Arbeitsergebnis vorzubereiten. In diesem Zusammenhang wäre es erforderlich, mehrere unterschiedliche Tätigkeiten zu koordinieren, wie z.B. das Beschaffen der erforderlichen Zutaten für das Menu, das Zubereiten der einzelnen Gänge für das Menu, das Bereitstellen des jeweils erforderlichen Geschirrs für die einzelnen Gänge des Menus, etc. Die Koordination von zahlreichen unterschiedlichen Tätigkeiten kann von einer Person als stressig empfunden werden. Des Weiteren kann es zu Fehlern bei der Koordination der unterschiedlichen Tätigkeiten kommen, insbesondere dann, wenn die unterschiedlichen Tätigkeiten mithilfe von unterschiedlichen Hausgeräten auszuführen sind.

US 8 145 854 B1 offenbart ein automatisiertes System und Verfahren zur Herstellung von Mahlzeiten anhand eines Rezeptes. Hierzu werden die zur Verfügung stehenden Haushaltsgeräte entsprechend gesteuert.

DE 10 2014 217616 A1 offenbart ein Verfahren und eine entsprechende Vorrichtung, durch die vernetzte Hausgeräte in effizienter Weise bedient und überwacht werden können.

US 2018/181094 A1 offenbart eine "Internet of Things"-basierte "Smart Home"-Umgebung, die auch Haushaltsgeräte umfasst.

US 2018/004568 A1 offenbart eine "Internet of Things"-Umgebung für verschiedene Anwendungen, zu denen auch ein "Smart Home" gehört.

DE 10 2015 211425 A1 beinhaltet ein Verfahren und eine entsprechende Steuereinheit zur automatisierten Rezepterstellung innerhalb eines Haushalts.

Das vorliegende Dokument befasst sich mit der technischen Aufgabe, ein System und ein Verfahren bereitzustellen, die eine Person in einem Haushalt bei der Ausführung von komplexen Tätigkeiten unterstützt, insbesondere um den Komfort für die Person zu erhöhen, und um die Fehlerrate bei der Ausführung der Tätigkeiten zu reduzieren.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein System zur Unterstützung eines Nutzers beim Erstellen eines Arbeitsergebnisses unter Verwendung von unterschiedlichen Typen von Hausgeräten beschrieben. Das System ist eingerichtet, Arbeitsdaten für das zu erstellende Arbeitsergebnis zu ermitteln. Die Arbeitsdaten umfassen eine Mehrzahl von Arbeitsschritten, die für das Erstellen des Arbeitsergebnisses auszuführen sind. Dabei zeigen die Arbeitsdaten für zumindest einige der Arbeitsschritte jeweils einen unterschiedlichen Typ von Hausgerät als Einheit an, durch die der jeweilige Arbeitsschritt auszuführen ist. Das System ist dazu eingerichtet, eine Liste von Typen von Hausgeräten zu ermitteln, die in einem Haushalt verfügbar sind. Auf Basis der Arbeitsdaten und der Liste ist das System in der Lage zu bestimmen, dass für zumindest einen Arbeitsschritt der zur Ausführung in den Arbeitsdaten angezeigte Typ von Hausgerät nicht in dem Haushalt verfügbar ist. Das System ist dazu eingerichtet, einen alternativen, in dem Haushalt verfügbaren Typ von Hausgerät für die Ausführung des Arbeitsschrittes zu ermitteln. Das System ist ferner dazu eingerichtet, die unterschiedlichen Typen von Hausgeräten in Abhängigkeit von den Arbeitsdaten automatisch zu betreiben, um den Nutzer beim Erstellen des Arbeitsergebnisses zu unterstützen.

Gemäß einem weiteren Aspekt der Erfindung wird ein Computer-implementiertes Verfahren zur Unterstützung eines Nutzers beim Erstellen eines Arbeitsergebnisses unter Verwendung von unterschiedlichen Typen von Hausgeräten in einem Haushalt beschrieben. Das Verfahren kann z.B. durch eine Steuereinheit ausgeführt werden. Das Verfahren umfasst das Ermitteln von Arbeitsdaten für das zu erstellende Arbeitsergebnis. Das Verfahren umfasst weiterhin, eine Liste von Typen von Hausgeräten zu ermitteln, die in einem Haushalt verfügbar sind. Auf Basis der Arbeitsdaten und der Liste kann dann bestimmt werden, dass für zumindest einen Arbeitsschritt der zur Ausführung in den Arbeitsdaten angezeigte Typ von Hausgerät nicht in dem Haushalt verfügbar ist. Das Verfahren umfasst dann den Schritt, einen alternativen, in dem Haushalt verfügbaren Typ von Hausgerät für die Ausführung des Arbeitsschrittes zu ermitteln. Außerdem umfasst das Verfahren das automatische Betreiben der unterschiedlichen Typen von Hausgeräten in Abhängigkeit von den Arbeitsdaten, um den Nutzer beim Erstellen des Arbeitsergebnisses zu unterstützen.

Es ist zu beachten, dass jegliche Aspekte des in diesem Dokument beschriebenen Systems und/oder des beschriebenen Verfahrens in vielfältiger Weise miteinander kombiniert werden können.

Im Weiteren wird die Erfindung anhand von in der beigefügten Zeichnung dargestellten Ausführungsbeispielen näher beschrieben. Dabei zeigen
- Figur 1: ein Blockdiagramm eines beispielhaften Systems zur Unterstützung eines Nutzers beim Erstellen eines Arbeitsergebnisses;
- Figur 2: beispielhafte Arbeitsdaten; und
- Figur 3: ein Ablaufdiagramm eines beispielhaften Verfahrens zur Unterstützung eines Nutzers beim Erstellen eines Arbeitsergebnisses.

Wie eingangs dargelegt, befasst sich das vorliegende Dokument mit der Unterstützung einer Person in einem Haushalt bei der Koordination und/oder Ausführung von unterschiedlichen Tätigkeiten, die zum Erreichen eines bestimmten Arbeitsergebnisses ausgeführt werden müssen. Beispielhafte Arbeitsergebnisse sind ein oder mehrere herzustellende Gerichte, oder die Organisation eines Events (z.B. eines Dinners oder einer Party). Die erforderlichen Tätigkeiten, um ein bestimmtes Arbeitsergebnis zu erzielen, können von einer Person im Vorfeld geplant werden, und in einer Tätigkeitsliste festgehalten werden. Die Tätigkeiten können dann von der Person unter Verwendung von ein oder mehreren Hausgeräten (wie z.B. einem Kühlschrank, einer Spülmaschine, einer Waschmaschine, einem Herd, einem Ofen, etc.) abgearbeitet werden. Dabei kann es vorkommen, dass einzelne Tätigkeiten nicht, falsch oder zu einem falschen Zeitpunkt ausgeführt werden, was zu Stress und zu einer Beeinträchtigung des Arbeitsergebnisses führen kann.

Beispielsweise kann eine Person in einem Haushalt als Arbeitsergebnis ein Abendessen für eine bestimmte Anzahl (z.B. 12) von Gästen mit einem Menü mit mehreren Gängen vorbereiten. In diesem Zusammenhang sind neben den erforderlichen Zutaten und der Zubereitung der einzelnen Gerichte auch das erforderliche Geschirr und/oder das erforderliche Kochgerät zu berücksichtigen. Des Weiteren ist zu berücksichtigen, in welcher zeitlichen Abfolge die einzelnen Gerichte zubereitet werden können, da es in einer Küche typischerweise nicht möglich ist, alle Gereichte gleichzeitig zuzubereiten. Es ist somit zu beachten, in welcher zeitlichen Reihenfolge unterschiedliche Hausgeräte genutzt werden müssen bzw. können.

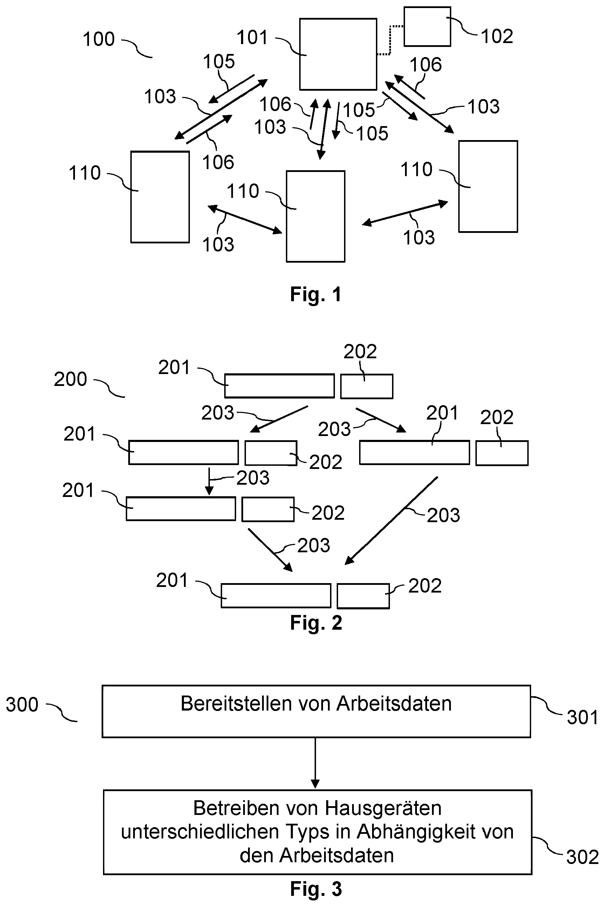

Die für ein zu erstellendes Arbeitsergebnis erforderlichen Arbeitsschritte können in sogenannten Arbeitsdaten zusammengefasst werden. Wenn es sich bei dem zu erstellenden Arbeitsergebnis um ein oder mehrere Gerichte handelt, so können die Arbeitsdaten z.B. ein oder mehrere Rezepte für die ein oder mehreren Gerichte umfassen. Fig. 2 zeigt beispielhafte Arbeitsdaten 200 in schematischer Weise. Die Arbeitsdaten 200 umfassen einzelne Arbeitsschritte bzw. Arbeitsanweisungen 201. Des Weiteren zeigen die Arbeitsdaten 200 die jeweils ausführende Einheit 202 für einen Arbeitsschritt 201 an. Außerdem können die Arbeitsdaten 200 eine zeitliche Abfolge der erforderlichen Arbeitsschritte 201 anzeigen. Zu diesem Zweck können die Arbeitsschritte 201 z.B. in einem Ablaufdiagramm (wie in Fig. 2 dargestellt) angeordnet sein. Wie in Fig. 2 dargestellt, kann es dabei ggf. möglich sein, mehrere Arbeitsschritte 201 parallel und/oder unabhängig voneinander auszuführen. Andererseits kann die Ausführung eines Arbeitsschrittes 201 ggf. an ein oder mehreren Bedingungen 203 geknüpft sein. Beispielsweise kann die Ausführung eines Arbeitsschrittes 201 nur unter der Bedingung erfolgen, dass ein oder mehrere vorhergehende Arbeitsschritte 203 bereits ausgeführt wurden.

Die Arbeitsdaten 200 für ein zu erstellendes Arbeitsergebnis können in einer Datenbank (z.B. in einer Rezeptdatenbank oder in einer Eventdatenbank) bereitgestellt werden. Die Datenbank kann für unterschiedliche Arbeitsergebnisse in einem Haushalt (z.B. für unterschiedliche Menüs oder für unterschiedliche Events) unterschiedliche Arbeitsdaten 200 umfassen.

In einem Haushalt werden typischerweise mehrere unterschiedliche Typen von Hausgeräten benutzt. Beispielhafte Hausgeräte, insbesondere Haushaltsgeräte, sind ein Kühlschrank, eine Kühltruhe, ein Ofen, ein Herd, eine Spülmaschine, ein Küchengerät, ein Multifunktionskocher, eine Waschmaschine, etc. Typischerweise werden zur Erstellung eines Arbeitsergebnisses mehrere unterschiedliche Typen von Hausgeräten verwendet. Beispielsweise kann es für die Organisation eines Abendessens mit mehreren Gängen für mehrere Personen erforderlich sein,
- im Vorfeld die Waschmaschine zu nutzen, um eine geeignete Tischdecke zu waschen;
- im Vorfeld die erforderlichen Zutaten für die unterschiedlichen Gänge zu beziehen; dabei kann der Bestand an Zutaten z.B. automatisch über den Kühlschrank ermittelt werden;
- im Vorfeld die Spülmaschine zu nutzen, um ausreichend Geschirr und Gläser zu reinigen;
- bei der Zubereitung der unterschiedlichen Gänge den Ofen, den Herd, einen Multifunktionskocher, ein Küchengerät, etc. zu nutzen;
- während des Abendessens Geschirr zu spülen, um ausreichend Geschirr für die unterschiedlichen Gänge zur Verfügung zu haben; und/oder
- im Anschluss den Geschirrspüler zu nutzen, um das benutzte Geschirr zu reinigen.

Fig. 1 zeigt ein beispielhaftes System 100, das eingerichtet ist, einen Nutzer bei der Erstellung eines Arbeitsergebnisses unter Verwendung von mehreren Hausgeräten 110 unterschiedlichen Typs zu unterstützen. Das System 100 kann z.B. eine Steuereinheit 101 aufweisen, die eingerichtet ist, mit einer Benutzerschnittstelle 102 des Systems 100 zu kommunizieren. Die Steuereinheit 101 kann z.B. Teil eines Hausgeräts 110 sein. Alternativ oder ergänzend kann die Steuereinheit 101 auf mehrere Hausgeräte 110 verteilt sein. Die Benutzerschnittstelle 102 kann es einem Nutzer ermöglichen, Eingaben an das System 100 zu tätigen, und/oder Ausgaben des Systems 100 einzusehen. Die Benutzerschnittstelle 102 kann z.B. über ein elektronisches Gerät (z.B. über ein Tablet PC oder über ein Smartphone) bereitgestellt werden.

Die Steuereinheit 101 ist eingerichtet, mit den unterschiedlichen Hausgeräten 100 über eine (ggf. drahtlose) Kommunikationsverbindung 103 zu kommunizieren (um Daten auszutauschen). Alternativ oder ergänzend kann eine direkte Kommunikation zwischen den einzelnen Hausgeräten 110 erfolgen.

Es kann einem Nutzer ermöglicht werden, über die Benutzerschnittstelle 102 Arbeitsdaten 200 für ein zu erstellendes Arbeitsergebnis zu selektieren. Zu diesem Zweck kann das System 100 dem Nutzer einen Zugriff auf eine Datenbank für Arbeitsdaten 200 für unterschiedliche Arbeitsergebnisse ermöglichen.

Die Steuereinheit 101 kann eingerichtet sein, den Nutzer auf Basis der Arbeitsdaten 200 dabei zu unterstützen, das Arbeitsergebnis zu erstellen. Insbesondere kann die Steuereinheit 101 eingerichtet sein, auf Basis der Arbeitsdaten 200 zumindest einen anstehenden Arbeitsschritt 201 zu identifizieren. Des Weiteren kann die Einheit 202 ermittelt werden, durch die der Arbeitsschritt 201 auszuführen ist. Wenn der Arbeitsschritt 201 durch den Nutzer ausführen ist, dann kann Information in Bezug auf den Arbeitsschritt 201 über die Benutzerschnittstelle 102 an den Nutzer ausgegeben werden.

Andererseits, wenn der Arbeitsschritt 201 durch ein bestimmtes Hausgerät 110 auszuführen ist, so kann eine Anweisung 105 in Bezug auf den Arbeitsschritt 201 an das bestimmte Hausgerät 110 gesendet werden. Die Anweisung 105 kann z.B. anzeigen: ein Betriebsprogramm, das von dem bestimmten Hausgerät 110 auszuführen ist; und/oder eine Betriebsdauer, eine Betriebstemperatur, eine Betriebsgeschwindigkeit, etc.

Das bestimmte Hausgerät 110 kann dann den Arbeitsschritte 201 gemäß der Anweisung 105 ausführen. Des Weiteren kann das bestimmte Hausgerät 110 eingerichtet sein, eine Rückmeldung 106 an die Steuereinheit 101 zu senden, wobei die Rückmeldung 106 z.B. anzeigen kann, dass das Hausgerät 110 den in der Anweisung 105 angezeigten Arbeitsschritt 201 ausgeführt hat.

Durch eine Kommunikation von unterschiedlichen Hausgeräten 110 untereinander und/oder mit einer Steuereinheit 101 kann z.B. im Rahmen der Organisation eines Mehr-Gänge-Abendessens automatisch ein geeignetes Spülprogramm an dem Geschirrspüler 110 zum Spülen des Geschirrs, das zur Zubereitung der Vorspeise verwendet wurde, ausgewählt werden, wenn der Herd 110 anzeigt, dass die Zubereitung der Vorspeise abgeschlossen ist. Des Weiteren kann z.B. nach Fertigstellung der Nachspeise automatisch ein Spülprogramm zum Spülen von Weingläsern voreingestellt werden. Es können somit Arbeitsdaten 200 (insbesondere Rezeptdaten) bereitgestellt werden, die Träger von Ausführungsanweisungen 201 für mehrere unterschiedliche Typen von Hausgeräten 110 sind, die direkt und/oder indirekt miteinander kommunizieren können.

Es können insbesondere für die Erstellung von Mahlzeiten bzw. Gerichten als Arbeitsergebnisse Multi-Device Rezepte (d.h. Arbeitsdaten 200) bereitgestellt werden, die unter Verwendung einer Kommunikation zwischen unterschiedlichen Typen von Hausgeräten 110 eine Integration der Hausgeräte 110 eines Haushaltes bei der Erstellung von Mahlzeiten bzw. Gerichten ermöglichen. Dabei kann einem Nutzer eine optimale Nutzung der verfügbaren Hausgeräte 110 (z.B. für die Herstellung eines Mehr-Gänge-Menüs) ermöglicht werden.

Durch eine Server-Abfrage und/oder durch eine Intergeräte-Kommunikation kann für jeden Typ von Hausgerät 110 die Liste der potenziell verfügbaren Hausgeräte 110 dieses Typs in dem Haushalt ermittelt werden. Insbesondere kann das System 100 (z.B. die Steuereinheit 101) eingerichtet sein, automatisch eine Liste von Hausgeräten 110 eines jeweiligen Typs in einem Haushalt zu erstellen. Die Liste von verfügbaren Hausgeräten 110 kann dann bei der Abarbeitung von Arbeitsdaten 200 für ein zu erstellendes Arbeitsergebnis berücksichtigt werden. Insbesondere kann überprüft werden, ob die erforderliche Einheit 202 für einen Arbeitsschritt 201 in einem Haushalt verfügbar ist oder nicht. Wenn die Einheit 202 nicht verfügbar ist, so kann ggf. ein alternatives Hausgeräts 110 eines anderen Typs ermittelt werden, durch die der Arbeitsschritt 201 ggf. auch ausgeführt werden kann. Alternativ oder ergänzend kann eine Ausgabe über die Benutzerschnittstelle 102 erfolgen, um den Nutzer darauf hinzuweisen, dass der Arbeitsschritt 201 nicht automatisch ausgeführt werden kann.

Ggf. können die Arbeitsdaten 200 als auszuführende Einheit 202 für einen Arbeitsschritt 201 mehrere unterschiedliche Typen von Hausgeräten 110 anzeigen. Z.B. kann als Standard bzw. Default ein bestimmter erste Typ von Hausgerät 110 (z.B. ein Ofen) angezeigt werden. Des Weiteren kann ggf. als mögliche Alternative bzw. als Fallback ein zweiter Typ von Hausgerät 110 (z.B. ein Mikrowellenofen) angezeigt werden. So kann eine zuverlässige Abarbeitung der Arbeitsdaten 200 für ein zu erstellendes Arbeitsergebnis ermöglicht werden.

Es wird somit ein System 100 zur Unterstützung eines Nutzers beim Erstellen eines Arbeitsergebnisses unter Verwendung von unterschiedlichen Typen von Hausgeräten 110 beschrieben. Die unterschiedlichen Typen von Hausgeräten können z.B. umfassen: einen Ofen; einen Herd; einen Multifunktions-Kocher; eine Spülmaschine; und/oder einen Kühlschrank, der eingerichtet ist, automatisch einen Bestand von Lebensmitteln, die in dem Kühlschrank gelagert sind, zu erfassen.

Das System 100 kann eine Benutzerschnittstelle 102 zur Interaktion mit einem Nutzer umfassen. Die Benutzerschnittstelle 102 kann z.B. durch ein Hausgerät 110 und/oder durch ein elektronisches Gerät (z.B. durch ein Smartphone) bereitgestellt werden. Außerdem kann das System 100 zumindest eine Steuereinheit 101 umfassen, die eingerichtet ist, Arbeitsdaten 200 für das zu erstellende Arbeitsergebnis auszuwerten. Die zumindest eine Steuereinheit 101 kann z.B. Teils eines Hausgeräts 110 und/oder eines elektronischen Geräts (z.B. eines Smartphones) sein.

Des Weiteren kann das System 100 Hausgeräte 110 unterschiedlichen Typs umfassen. Insbesondere kann das System 100 die in einem Haushalt vorhandenen Hausgeräte 110 umfassen. Die Steuereinheit 101, die Hausgeräte 110 und/oder die Benutzerschnittstelle 102 können eingerichtet sein, über eine Kommunikationsverbindung 103 Daten auszutauschen, um den Nutzer in Abhängigkeit von den Arbeitsdaten 200 bei der Erstellung des Arbeitsergebnisses zu unterstützen.

Das System 100 (insbesondere eine Steuereinheit 101 des Systems 100) kann eingerichtet sein, Arbeitsdaten 200 für das zu erstellende Arbeitsergebnis zu ermitteln (z.B. von einer Datenbasis für Arbeitsdaten 200). Die Arbeitsdaten 200 können (wie in Zusammenhang mit Fig. 2 dargelegt) eine Mehrzahl von Arbeitsschritten 201 anzeigen, die für das Erstellen des Arbeitsergebnisses auszuführen sind. Dabei können die Arbeitsdaten 200 für zumindest einige der Arbeitsschritte 201 jeweils einen unterschiedlichen Typ von Hausgerät 110 als Einheit 202 anzeigen, durch die der jeweilige Arbeitsschritt 201 auszuführen ist. Das zu erstellende Arbeitsergebnis kann z.B. ein oder mehrere Gerichte umfassen. In diesem Fall können die Arbeitsdaten 200 Arbeitsschritte 201 zur Herstellung der ein oder mehreren Gerichte umfassen.

Des Weiteren kann das System 100 (insbesondere die Steuereinheit 101 des Systems 100) eingerichtet sein, die unterschiedlichen Typen von Hausgeräten 110 in Abhängigkeit von den Arbeitsdaten 200 automatisch zu betreiben, um den Nutzer beim Erstellen des Arbeitsergebnisses zu unterstützen. Durch die automatische Koordination von Arbeitsschritten 201, die durch unterschiedliche Typen von Hausgeräten 110 auszuführen sind, können der Komfort und die Zuverlässigkeit beim Erstellen eines Arbeitsergebnisses in einem Haushalt erhöht werden.

Die Arbeitsdaten 201 können die Reihenfolge anzeigen, in denen unterschiedliche Arbeitsschritte 201 auszuführen sind (z.B. in Form von ein oder mehreren Bedingungen 203). Insbesondere können die Arbeitsdaten 201 anzeigen, dass ein zweiter Arbeitsschritt 201 durch einen zweiten Typ von Hausgerät 110 auszuführen ist, nachdem ein erster Arbeitsschritt 201 durch einen ersten Typ von Hausgerät 110 ausgeführt wurde. Das System 100 bzw. die Steuereinheit 101 können dann eingerichtet sein, ein Hausgerät 201 des zweiten Typs automatisch zur Ausführung des zweiten Arbeitsschrittes 201 zu betreiben, nachdem durch ein Hausgerät 110 des ersten Typs angezeigt wurde, dass der erste Arbeitsschritt 201 ausgeführt wurde. Es kann somit eine koordinierte Ablaufsteuerung von unterschiedlichen Typen von Hausgeräten 110 erfolgen.

Die Steuereinheit 101 kann somit eingerichtet sein, auf Basis der Arbeitsdaten 200 zu ermitteln, dass ein erster Arbeitsschritt 201 durch ein Hausgerät 110 eines ersten Typs ausgeführt werden soll, und dass ein zweiter Arbeitsschritt 201 durch ein Hausgerät 110 eines zweiten Typs ausgeführt werden soll. Es kann dann ein Hausgerät 110 des ersten Typs mittels einer ersten Anweisung 105 veranlasst werden, den ersten Arbeitsschritt 201 auszuführen, und es kann ein Hausgerät 110 des zweiten Typs mittels einer zweiten Anweisung 105 veranlasst werden, den zweiten Arbeitsschritt 201 auszuführen. So kann eine zuverlässige Ausführung von Arbeitsschritten 201 zum Erstellen des Arbeitsergebnisses bewirkt werden.

Insbesondere kann die Steuereinheit 101 eingerichtet sein, auf Basis der Arbeitsdaten 200 zu ermitteln, dass der zweite Arbeitsschritt 201 nach Abschluss des ersten Arbeitsschrittes 201 auszuführen ist. Das Hausgerät 110 des zweiten Typs kann ggf. erst dann und/oder sobald veranlasst werden, den zweiten Arbeitsschritt 201 auszuführen, wenn eine Rückmeldung 106 von dem Hausgerät 110 des ersten Typs erfolgt ist, die anzeigt, dass der erste Arbeitsschritt 201 abgeschlossen wurde. Es kann somit in zuverlässiger Weise eine koordinierte Ablaufsteuerung von unterschiedlichen Typen von Hausgeräten 110 erfolgen.

Das System 100 (insbesondere die Steuereinheit 101) kann eingerichtet sein, eine Liste von Typen von Hausgeräten 110 zu ermitteln, die in einem Haushalt verfügbar sind. Es können dann zumindest einige der unterschiedlichen Typen von Hausgeräten 110, die in der Liste angezeigt werden, automatisch in Abhängigkeit von den Arbeitsdaten 200 betrieben werden, um den Nutzer beim Erstellen des Arbeitsergebnisses zu unterstützen. Durch die automatische Berücksichtigung der verfügbaren Typen von Hausgeräten kann die Zuverlässigkeit beim Erstellen eines Arbeitsergebnisses weiter erhöht werden.

Das System 100 (insbesondere die Steuereinheit 101) kann eingerichtet sein, auf Basis der Arbeitsdaten 200 und auf Basis der Liste von verfügbaren Hausgeräten 110 zu bestimmen, dass für zumindest einen Arbeitsschritt 201 der zur Ausführung in den Arbeitsdaten 200 angezeigte Typ von Hausgerät 110 nicht in dem Haushalt verfügbar ist. Es kann dann ggf. automatisch ein alternativer, in dem Haushalt verfügbarer, Typ von Hausgerät 110 für die Ausführung des Arbeitsschrittes 201 ermittelt werden.

Beispielsweise können die Arbeitsdaten 200 für den zumindest einen Arbeitsschritt 201 einen ersten Typ von Hausgerät 110 als Standard-Einheit 202 zur Ausführung des zumindest einen Arbeitsschrittes 201 und einen zweiten Typ von Hausgerät 110 als Ersatz-Einheit 202 zur Ausführung des zumindest einen Arbeitsschrittes 201 anzeigen. Es kann dann in automatischer Weise überprüft werden, ob zumindest die in den Arbeitsdaten 200 angezeigte Ersatz-Einheit 202 als alternativer Typ von Hausgerät 110 in dem Haushalt verfügbar ist. Durch die automatische Ermittlung eines alternativen Typs von Hausgerät 110 zur Ausführung eines Arbeitsschrittes 201 kann die Zuverlässigkeit des Erstellens eines Arbeitsergebnisses weiter erhöht werden.

Alternativ oder ergänzend zu der Ermittlung und Verwendung eines alternativen Typs von Hausgerät 110 kann eine Ausgabe von Information in Bezug auf den Arbeitsschritt 201, für den der angeforderte Typ von Hausgerät 110 nicht verfügbar ist, an den Nutzer des Systems 100 veranlasst werden (z.B. über die Benutzerschnittstelle 102). So kann die Zuverlässigkeit des Erstellens eines Arbeitsergebnisses weiter erhöht werden.

Die Arbeitsdaten 200 können für zumindest einen Arbeitsschritt 201 den Nutzer als ausführende Einheit 202 anzeigen. Das System 100 (insbesondere die Steuereinheit 101) kann dann eingerichtet sein, Information in Bezug auf den von dem Nutzer auszuführenden Arbeitsschritt 201 an den Nutzer auszugeben (z.B. über die Benutzerschnittstelle 102). Es kann somit in automatischer Weise ein zwischen den Hausgeräten 110 und dem Nutzer koordiniertes Erstellen des Arbeitsergebnisses erfolgen.

Fig. 3 zeigt ein Ablaufdiagramm eines beispielhaften Verfahrens 300 zur Unterstützung eines Nutzers beim Erstellen eines Arbeitsergebnisses unter Verwendung von unterschiedlichen Typen von Hausgeräten 110 in einem Haushalt. Das Verfahren 300 umfasst das Ermitteln 301 von Arbeitsdaten 200 für das zu erstellende Arbeitsergebnis. Die Arbeitsdaten 200 zeigen eine Mehrzahl von Arbeitsschritten 201 an, die für das Erstellen des Arbeitsergebnisses auszuführen sind. Dabei zeigen die Arbeitsdaten 200 für zumindest einige der Arbeitsschritte 201 jeweils einen unterschiedlichen Typ von Hausgerät 110 als Einheit 202 an, durch die der jeweilige Arbeitsschritt 201 auszuführen ist. Das Verfahren 300 umfasst ferner das automatische Betreiben 302 der unterschiedlichen Typen von Hausgeräten 110 in Abhängigkeit von den Arbeitsdaten 200, um den Nutzer beim Erstellen des Arbeitsergebnisses zu unterstützen.

Durch die in diesem Dokument beschriebenen Aspekte können der Komfort und die Zuverlässigkeit der Erstellung von Arbeitsergebnissen unter Verwendung von unterschiedlichen Typen von Hausgeräten 110 erhöht werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems und/oder des vorgeschlagenen Verfahrens veranschaulichen sollen.

## Patentansprüche

1. System (100) zur Unterstützung eines Nutzers beim Erstellen eines Arbeitsergebnisses unter Verwendung von unterschiedlichen Typen von Hausgeräten (110), wobei das System (100) eingerichtet ist,
- Arbeitsdaten (200) für das zu erstellende Arbeitsergebnis zu ermitteln; wobei die Arbeitsdaten (200) eine Mehrzahl von Arbeitsschritten (201) anzeigen, die für das Erstellen des Arbeitsergebnisses auszuführen sind; und wobei die Arbeitsdaten (200) für zumindest einige der Arbeitsschritte (201) jeweils einen unterschiedlichen Typ von Hausgerät (110) als Einheit (202) anzeigen, durch die der jeweilige Arbeitsschritt (201) auszuführen ist;
- eine Liste von Typen von Hausgeräten (110) zu ermitteln, die in einem Haushalt verfügbar sind;
- auf Basis der Arbeitsdaten (200) und auf Basis der Liste zu bestimmen, dass für zumindest einen Arbeitsschritt (201) der zur Ausführung in den Arbeitsdaten (200) angezeigte Typ von Hausgerät (110) nicht in dem Haushalt verfügbar ist;
- einen alternativen, in dem Haushalt verfügbaren, Typ von Hausgerät (110) für die Ausführung des Arbeitsschrittes (201) zu ermitteln; und
- die unterschiedlichen Typen von Hausgeräten (110) in Abhängigkeit von den Arbeitsdaten (200) automatisch zu betreiben, um den Nutzer beim Erstellen des Arbeitsergebnisses zu unterstützen.

2. System (100) gemäß Anspruch 1, wobei
- die Arbeitsdaten (201) eine Reihenfolge anzeigen, in denen unterschiedliche Arbeitsschritte (201) auszuführen sind;
- die Arbeitsdaten (201) anzeigen, dass ein zweiter Arbeitsschritt (201) durch einen zweiten Typ von Hausgerät (110) auszuführen ist, nachdem ein erster Arbeitsschritt (201) durch einen ersten Typ von Hausgerät (110) ausgeführt wurde; und
- das System (100) eingerichtet ist, ein Hausgerät (201) des zweiten Typs automatisch zur Ausführung des zweiten Arbeitsschrittes (201) zu betreiben, nachdem durch ein Hausgerät (110) des ersten Typs angezeigt wurde, dass der erste Arbeitsschritt (201) ausgeführt wurde.

3. System (100) gemäß einem der vorhergehenden Ansprüche, wobei
- das System (100) zumindest eine Steuereinheit (101) umfasst; und
- die Steuereinheit (101) eingerichtet ist,
- auf Basis der Arbeitsdaten (200) zu ermitteln, dass ein erster Arbeitsschritt (201) durch ein Hausgerät (110) eines ersten Typs ausgeführt werden soll, und dass ein zweiter Arbeitsschritt (201) durch ein Hausgerät (110) eines zweiten Typs ausgeführt werden soll; und
- ein Hausgerät (110) des ersten Typs mittels einer ersten Anweisung (105) zu veranlassen, den ersten Arbeitsschritt (201) auszuführen, und ein Hausgerät (110) des zweiten Typs mittels einer zweiten Anweisung (105) zu veranlassen, den zweiten Arbeitsschritt (201) auszuführen.

4. System (100) gemäß Anspruch 3, wobei die Steuereinheit (101) eingerichtet ist,
- auf Basis der Arbeitsdaten (200) zu ermitteln, dass der zweite Arbeitsschritt (201) nach Abschluss des ersten Arbeitsschrittes (201) auszuführen ist; und
- das Hausgerät (110) des zweiten Typs erst dann und/oder sobald zu veranlassen, den zweiten Arbeitsschritt (201) auszuführen, wenn eine Rückmeldung (106) von dem Hausgerät (110) des ersten Typs erfolgt ist, die anzeigt, dass der erste Arbeitsschritt (201) abgeschlossen wurde.

5. System (100) gemäß einem der vorhergehenden Ansprüche, wobei
- die Arbeitsdaten (200) für den zumindest einen Arbeitsschritt (201) einen ersten Typ von Hausgerät (110) als Standard-Einheit (202) zur Ausführung des Arbeitsschrittes (201) und einen zweiten Typ von Hausgerät (110) als Ersatz-Einheit (202) zur Ausführung des Arbeitsschrittes (201) anzeigen; und
- das System (100) eingerichtet ist, den alternativen, in dem Haushalt verfügbaren, Typ von Hausgerät (110) als die in den Arbeitsdaten (200) angezeigte Ersatz-Einheit (202) zu ermitteln.

6. System (100) gemäß einem der vorhergehenden Ansprüche, wobei
- die Arbeitsdaten (200) für zumindest einen Arbeitsschritt (201) den Nutzer als ausführende Einheit (202) anzeigen; und
- das System (100) eingerichtet ist, Information in Bezug auf den von dem Nutzer auszuführenden Arbeitsschritt (201) an den Nutzer auszugeben.

7. System (100) gemäß einem der vorhergehenden Ansprüche, wobei die unterschiedlichen Typen von Hausgeräten (110) umfassen,
- einen Ofen;
- einen Herd;
- einen Multifunktions-Kocher;
- eine Spülmaschine; und/oder
- einen Kühlschrank, der eingerichtet ist, automatisch einen Bestand von Lebensmitteln, die in dem Kühlschrank gelagert sind, zu erfassen;

8. System (100) gemäß einem der vorhergehenden Ansprüche, wobei das System (100) umfasst,
- eine Benutzerschnittstelle (102) zur Interkation mit dem Nutzer;
- zumindest eine Steuereinheit (101), die eingerichtet ist, die Arbeitsdaten (200) für das zu erstellende Arbeitsergebnis auszuwerten; und
- Hausgeräte (110) unterschiedlichen Typs; wobei die Steuereinheit (101), die Hausgeräte (110) und/oder die Benutzerschnittstelle (102) eingerichtet sind, über eine Kommunikationsverbindung (103) Daten auszutauschen, um den Nutzer in Abhängigkeit von den Arbeitsdaten (200) bei der Erstellung des zu erstellenden Arbeitsergebnisses zu unterstützen.

9. System (100) gemäß einem der vorhergehenden Ansprüche, wobei das zu erstellende Arbeitsergebnis ein oder mehrere Gerichte umfasst; und wobei die Arbeitsdaten (200) Arbeitsschritte (201) zur Herstellung der ein oder mehreren Gerichte umfassen.

10. Computer-implementiertes Verfahren (300) zur Unterstützung eines Nutzers beim Erstellen eines Arbeitsergebnisses unter Verwendung von unterschiedlichen Typen von Hausgeräten (110) in einem Haushalt, wobei das Verfahren (300) umfasst,
- Ermitteln (301) von Arbeitsdaten (200) für das zu erstellende Arbeitsergebnis; wobei die Arbeitsdaten (200) eine Mehrzahl von Arbeitsschritten (201) anzeigen, die für das Erstellen des Arbeitsergebnisses auszuführen sind; und wobei die Arbeitsdaten (200) für zumindest einige der Arbeitsschritte (201) jeweils einen unterschiedlichen Typ von Hausgerät (110) als Einheit (202) anzeigen, durch die der jeweilige Arbeitsschritt (201) auszuführen ist;
- Ermitteln einer Liste von Typen von Hausgeräten (110), die in einem Haushalt verfügbar sind;
- Bestimmen, auf Basis der Arbeitsdaten (200) und auf Basis der Liste, dass für zumindest einen Arbeitsschritt (201) der zur Ausführung in den Arbeitsdaten (200) angezeigte Typ von Hausgerät (110) nicht in dem Haushalt verfügbar ist;
- Ermitteln eines alternativen, in dem Haushalt verfügbaren, Typs von Hausgerät (110) für die Ausführung des Arbeitsschrittes (201); und
- automatisches Betreiben (302) der unterschiedlichen Typen von Hausgeräten (110) in Abhängigkeit von den Arbeitsdaten (200), um den Nutzer beim Erstellen des Arbeitsergebnisses zu unterstützen.

## Claims

1. A system (100) for assisting a user in creating a work result using different types of household appliances (110), wherein the system (100) is designed to:
- determine work data (200) for the work result to be created; wherein the work data (200) indicates a plurality of work steps (201) which are to be executed for the creation of the work result; and wherein the work data (200) in each case indicates, for at least some of the work steps (201), a different type of household appliance (110) as the unit (202) by which the respective work step (201) is to be executed;
- determine a list of types of household appliances (110) which are available in a household;
- ascertain, on the basis of the work data (200) and on the basis of the list, that for at least one work step (201) the type of household appliance (110) indicated for execution in the work data (200) is not available in the household;
- determine an alternative type of household appliance (110), which is available in the household, for the execution of the work step (201); and
- automatically operate the different types of household appliances (110), as a function of the work data (200), in order to assist the user in creating the work result.

2. The system (100) as claimed in claim 1, wherein
- the work data (201) indicates an order in which different work steps (201) are to be executed;
- the work data (201) indicates that a second work step (201) is to be executed by a second type of household appliance (110), after a first work step (201) has been executed by a first type of household appliance (110); and
- the system (100) is designed to automatically operate a household appliance (201) of the second type for the execution of the second work step (201), after it has been indicated by a household appliance (110) of the first type that the first work step (201) has been executed.

3. The system (100) as claimed in one of the preceding claims, wherein
- the system (100) includes at least one control unit (101); and
- the control unit (101) is designed:
- to determine, on the basis of the work data (200), that a first work step (201) should be executed by a household appliance (110) of a first type, and that a second work step (201) should be executed by a household appliance (110) of a second type; and
- to cause a household appliance (110) of the first type, by means of a first instruction (105), to execute the first work step (201), and to cause a household appliance (110) of the second type, by means of a second instruction (105), to execute the second work step (201).

4. The system (100) as claimed in claim 3, wherein the control unit (101) is designed:
- to determine, on the basis of the work data (200), that the second work step (201) is to be executed on completion of the first work step (201); and
- to cause the household appliance (110) of the second type to execute the second work step (201) only if and/or as soon as feedback (106) is received from the household appliance (110) of the first type which indicates that the first work step (201) has been completed.

5. The system (100) as claimed in one of the preceding claims, wherein
- the work data (200) for the at least one work step (201) indicates a first type of household appliance (110) as the standard unit (202) for the execution of the work step (201) and a second type of household appliance (110) as the replacement unit (202) for the execution of the work step (201); and
- the system (100) is designed to determine the alternative type of household appliance (110), which is available in the household, as the replacement unit (202) indicated in the work data (200).

6. The system (100) as claimed in one of the preceding claims, wherein
- the work data (200) indicates, for at least one work step (201), the user as the executing unit (202); and
- the system (100) is designed to output to the user information relating to the work step (201) to be executed by the user.

7. The system (100) as claimed in one of the preceding claims, wherein the different types of household appliances (110) include:
- an oven;
- a stove;
- a multifunctional cooker;
- a dishwasher; and/or
- a refrigerator, which is designed to automatically detect a stock of food which is stored in the refrigerator.

8. The system (100) as claimed in one of the preceding claims, wherein the system (100) includes:
- a user interface (102) for interaction with the user;
- at least one control unit (101), which is designed to evaluate the work data (200) for the work result to be created; and
- different types of household appliances (110); wherein the control unit (101), the household appliances (110) and/or the user interface (102) are designed to exchange data via a communication link (103), in order to assist the user, as a function of the work data (200), in creating the work result to be created.

9. The system (100) as claimed in one of the preceding claims, wherein the work result to be created includes one or more dishes; and wherein the work data (200) includes work steps (201) for the production of the one or more dishes.

10. A computer-implemented method (300) for assisting a user in creating a work result using different types of household appliances (110) in a household, wherein the method (300) includes
- determining (301) work data (200) for the work result to be created; wherein the work data (200) indicates a plurality of work steps (201) which are to be executed for the creation of the work result; and wherein the work data (200) in each case indicates, for at least some of the work steps (201), a different type of household appliance (110) as the unit (202) by which the respective work step (201) is to be executed;
- determining a list of types of household appliances (110) which are available in a household;
- ascertaining, on the basis of the work data (200) and on the basis of the list, that for at least one work step (201) the type of household appliance (110) indicated for execution in the work data (200) is not available in the household;
- determining an alternative type of household appliance (110), which is available in the household, for the execution of the work step (201); and
- automatically operating (302) the different types of household appliances (110), as a function of the work data (200), in order to assist the user in creating the work result.

## Revendications

1. Système (100) pour le soutien d'un utilisateur lors de la réalisation d'un résultat de travail en utilisant différents types d'appareils ménagers (110), dans lequel le système (100) est aménagé
- pour établir des données de travail (200) pour le résultat de travail à réaliser ; dans lequel les données de travail (200) indiquent une pluralité d'étapes de travail (201) à exécuter pour la réalisation du résultat de travail ; et dans lequel les données de travail (200) indiquent, pour au moins certaines des étapes de travail (201), respectivement un type différent d'appareil ménager (110) en tant qu'unité (202) via laquelle l'étape de travail respective (201) est à exécuter ;
- pour établir une liste de types d'appareils ménagers (110) qui sont disponibles dans un ménage ;
- pour déterminer, sur la base des données de travail (200) et sur la base de la liste, que pour au moins une étape de travail (201), le type d'appareil ménager (110) indiqué pour l'exécution dans les données de travail (200) n'est pas disponible dans le ménage ;
- pour établir un type d'appareil ménager (110) alternatif disponible dans le ménage pour l'exécution de l'étape de travail (201) ; et
- pour exploiter automatiquement les différents types d'appareils ménagers (110) en fonction des données de travail (200) afin de soutenir l'utilisateur lors de la réalisation du résultat de travail.

2. Système (100) selon la revendication 1, dans lequel
- les données de travail (201) indiquent un ordre dans lequel différentes étapes de travail (201) sont à exécuter ;
- les données de travail (201) indiquent qu'une deuxième étape de travail (201) est à exécuter par un deuxième type d'appareil ménager (110) après qu'une première étape de travail (201) a été exécutée par un premier type d'appareil ménager (110) ; et
- le système (100) est aménagé pour exploiter automatiquement un appareil ménager (201) du deuxième type pour l'exécution de la deuxième étape de travail (201) après qu'un appareil ménager (110) du premier type a indiqué que la première étape de travail (201) a été exécutée.

3. Système (100) selon l'une des revendications précédentes, dans lequel
- le système (100) comprend au moins une unité de commande (101) ; et
- l'unité de commande (101) est aménagée
- pour établir, sur la base des données de travail (200), qu'une première étape de travail (201) doit être exécutée par un appareil ménager (110) d'un premier type, et qu'une deuxième étape de travail (201) doit être exécutée par un appareil ménager (110) d'un deuxième type ; et
- pour faire en sorte qu'un appareil ménager (110) du premier type exécute la première étape de travail (201) au moyen d'une première instruction (105), et pour faire en sorte qu'un appareil ménager (110) du deuxième type exécute la deuxième étape de travail (201) au moyen d'une deuxième instruction (105).

4. Système (100) selon la revendication 3, dans lequel l'unité de commande (101) est aménagée,
- pour déterminer, sur la base des données de travail (200), que la deuxième étape de travail (201) est à exécuter après l'achèvement de la première étape de travail (201) ; et
- pour faire en sorte que l'appareil ménager (110) du deuxième type n'exécute la deuxième étape de travail (201) que lorsqu'un et/ou dès qu'un retour d'information (106), indiquant que la première étape de travail (201) a été achevée, a été effectuée par l'appareil ménager (110) du premier type.

5. Système (100) selon l'une des revendications précédentes, dans lequel
- les données de travail (200) pour l'au moins une étape de travail (201) indiquent un premier type d'appareil ménager (110) en tant qu'unité standard (202) pour l'exécution de l'étape de travail (201) et un deuxième type d'appareil ménager (110) en tant qu'unité de substitution (202) pour l'exécution de l'étape de travail (201) ; et
- le système (100) est aménagé pour établir le type d'appareil ménager (110) alternatif disponible dans le ménage en tant qu'unité de substitution (202) indiquée dans les données de travail (200).

6. Système (100) selon l'une des revendications précédentes, dans lequel
- les données de travail (200) indiquent, pour au moins une étape de travail (201), l'utilisateur en tant qu'unité exécutante (202) ; et
- le système (100) est aménagé pour émettre à destination de l'utilisateur des informations relatives à l'étape de travail (201) à exécuter par l'utilisateur.

7. Système (100) selon l'une des revendications précédentes, dans lequel les différents types d'appareils ménagers (110) comprennent,
- un four ;
- une cuisinière ;
- un cuiseur multifonctions ;
- un lave-vaisselle ; et/ou
- un réfrigérateur aménagé pour détecter automatiquement un stock de denrées alimentaires stockées dans le réfrigérateur.

8. Système (100) selon l'une des revendications précédentes, dans lequel le système (100) comprend,
- une interface utilisateur (102) pour l'interaction avec l'utilisateur ;
- au moins une unité de commande (101), qui est aménagée pour évaluer les données de travail (200) pour le résultat de travail à réaliser ; et
- des appareils ménagers (110) de différents types ; dans lequel l'unité de commande (101), les appareils ménagers (110) et/ou l'interface utilisateur (102) sont aménagés pour échanger des données via une liaison de communication (103) afin de soutenir l'utilisateur, en fonction des données de travail (200), lors de la réalisation du résultat de travail à réaliser.

9. Système (100) selon l'une des revendications précédentes, dans lequel le résultat de travail à réaliser comprend un ou plusieurs plat(s) ; et dans lequel les données de travail (200) comprennent des étapes de travail (201) pour la production desdits un ou plusieurs plat(s).

10. Procédé mis en œuvre par ordinateur (300) pour le soutien d'un utilisateur lors de la réalisation d'un résultat de travail en utilisant différents types d'appareils ménagers (110) dans un ménage, dans lequel le procédé (300) comprend,
- l'établissement (301) de données de travail (200) pour le résultat de travail à réaliser ; dans lequel les données de travail (200) indiquent une pluralité d'étapes de travail (201) à exécuter pour la réalisation du résultat de travail ; et dans lequel les données de travail (200) indiquent, pour au moins certaines des étapes de travail (201), respectivement un type différent d'appareil ménager (110) en tant qu'unité (202) via laquelle l'étape de travail respective (201) est à exécuter ;
- l'établissement d'une liste de types d'appareils ménagers (110) qui sont disponibles dans un ménage ;
- la détermination, sur la base des données de travail (200) et sur la base de la liste, que pour au moins une étape de travail (201), le type d'appareil ménager (110) indiqué pour l'exécution dans les données de travail (200) n'est pas disponible dans le ménage ;
- l'établissement d'un type d'appareil ménager (110) alternatif disponible dans le ménage pour l'exécution de l'étape de travail (201) ; et
- l'exploitation automatique (302) des différents types d'appareils ménagers (110) en fonction des données de travail (200) afin de soutenir l'utilisateur lors de la réalisation du résultat de travail.
